# EUROPEAN PATENT SPECIFICATION

(11) **EP 2 366 191 B1**
(45) Date of publication and mention of the grant of the patent: **13.04.2016**
(21) Application number: 09763900.9
(22) Date of filing: 11.11.2009
(51) Int. Cl.: H01H 5/02, H01H 21/24, H02K 35/02, H02K 7/18

(54) **ELECTRICAL GENERATOR OF PUSHBUTTON TYPE**
STROMGENERATOR DES DRUCKTASTENTYPS
GÉNÉRATEUR ÉLECTRIQUE DU TYPE À BOUTON-POUSSOIR

(30) Priority: 14.11.2008 IT MI20082028; 14.11.2008 IT MI20082027
(43) Date of publication of application: 21.09.2011
(73) Proprietor: Frazza, Franco, 35044 Montagnana (IT)
(72) Inventor: Frazza, Franco, 35044 Montagnana (IT)
(74) Representative: Piovesana, Paolo
(86) International application number: PCT/EP2009/064956
(87) International publication number: WO 2010/055045

(56) References cited:
- DE-A1- 2 054 410
- DE-B- 1 170 000
- DE-U1- 29 905 431
- US-A- 4 412 355
- US-A1- 2003 042 122

## Description

The present invention relates to an electrical generator of pushbutton type.

It is known in the art to form generator devices comprising a pushbutton movable under the action of an external force, a magnet rigidly connected to the pushbutton, and an electrical winding within which the magnet induces an electric current during its operation.

The pushbutton is movable between a rest position and a pressed position.

An electric voltage pulse is generated within the winding at each press and at each release of the pushbutton.

These known devices comprise a spring which constantly urges the pushbutton towards the rest position such that, following a pressing action, the pushbutton/magnet unit is able to return to its initial start position.

These known devices have however a complex and costly structure. In particular, a return spring has to be provided, acting on the pushbutton. Moreover, passage of the pushbutton from its rest to its pressed position is not smooth and immediate because the force of the return spring increases while the pushbutton is being pressed towards its completely pressed position.

This results in a certain irregularity in the shape and duration of the electric voltage pulses as the force applied to the pushbutton varies. Moreover the pushbutton generators of this type normally have a certain bulk, in particular in the direction of the pushbutton movement.

DE2054410 describes an electrical generator of the pushbutton type comprising a casing, a ferromagnetic element placed inside the casing, an electrical winding mounted on the ferromagnetic element, a permanent magnet, forming with said ferromagnetic element a magnetic circuit linked to said electrical winding, and a pushbutton that can be activated by the operator to create flux variations in said magnetic circuit and so to induce in the electrical winding a tension sufficient for a practical use.

In this known generator, by activating the pushbutton a spring is preloaded that starts to mechanically open the magnetic circuit. This, due to the elastic reaction of the preloaded spring, opens swiftly and completely. When the pushbutton is then released, the magnetic attraction returns again the magnetic circuit to its original configuration.

In this known generator an arm (5) mechanically opens the magnetic circuit. Arm (5) is separate from pushbutton (6) and is moved by the spring (7).

This known generator shows a certain degree of complexity in its construction, due in particular to the essential presence of the spring.

An object of the invention is to eliminate these drawbacks by providing an electrical generator having a simple and economical structure and a small number of components.

Another object of the invention is to provide an electrical generator provided with a pushbutton able to pass rapidly from the rest position to the pressed position when the force applied to the pushbutton reaches the predetermined threshold.

These and other objects which will be apparent from the ensuing description are attained according to the invention by an electrical generator as described in claim 1.

A preferred embodiment of the present invention and some variants thereof are further clarified hereinafter with reference to the accompanying drawings, in which:
- Figure 1: is an exploded perspective view of a first embodiment of the generator of the invention,
- Figure 2: is a section therethrough with the pushbutton in the pressed position,
- Figure 3: shows it in the same view as Figure 2 but with the pushbutton in the rest position,
- Figures 4-6: show alternative forms of the pushbutton according to the invention,
- Figure 7: is an exploded perspective view showing a variant of the generator,
- Figure 8: is a section through the assembled generator with the pushbutton shown not pressed,
- Figure 9: is a section through the generator with the pushbutton shown pressed,

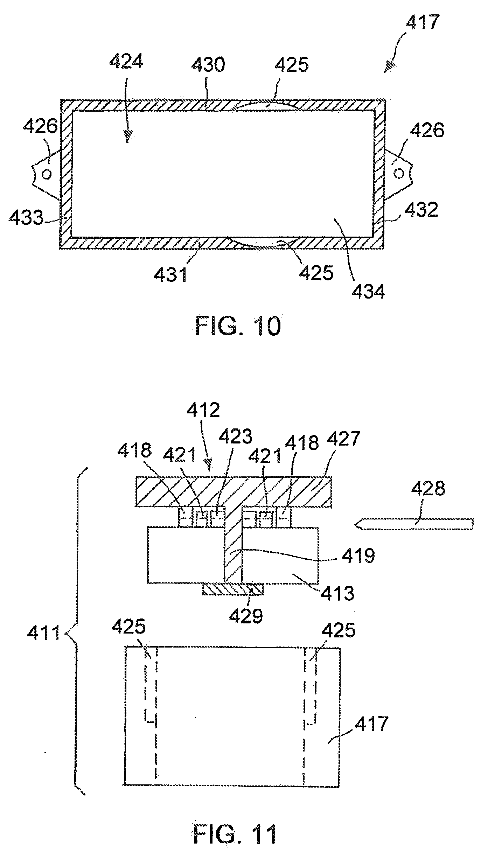

- Figure 10: is a partially exploded front view of the generator of Figure 8,
- Figure 11: is a plan section through the generator casing,

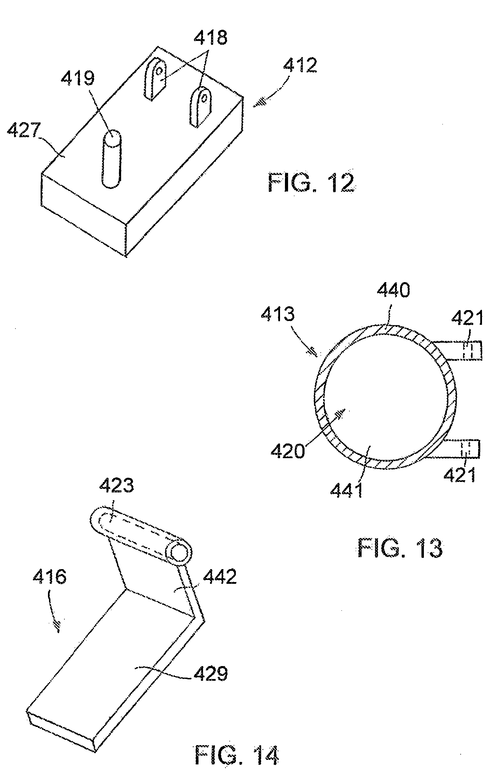

- Figure 12: is a perspective view of the generator pushbutton,
- Figure 13: is a plan view of the ferromagnetic core, and
- Figure 14: is a perspective view of the movable portion of the magnetic circuit.

As can be seen from the figures, the electrical generator, indicated overall by 10, consists of an outer cylindrical casing 11 housing a pushbutton 12 movable relative to the casing between a rest position and a pressed position, a cylindrical magnet 15, and an electrical winding 14 disposed in proximity to the magnet such as to be traversed by its magnetic flux.

The generator also comprises a ferromagnetic core 13, associated with the electrical winding 14 and arranged to magnetically attract the magnet 15 in the direction of the pushbutton 12.

The magnet 15 is movable between a first position close to the core 13 and a second position distant from the core, to induce an electric voltage in the winding 14.

The movement of the magnet 15 takes place under the action of a force applied to the pushbutton, by virtue of the presence of shanks 16, projecting from the pushbutton 12, which embrace the ferromagnetic core 13 and act on the magnet 15 such as to cause it to withdraw from the core 13 when the pushbutton is pressed.

The casing 11 is of hollow cylindrical shape with two apertures 17 and 25 at its opposite ends, i.e. in the position of the magnet 15 and of the pushbutton 12 respectively.

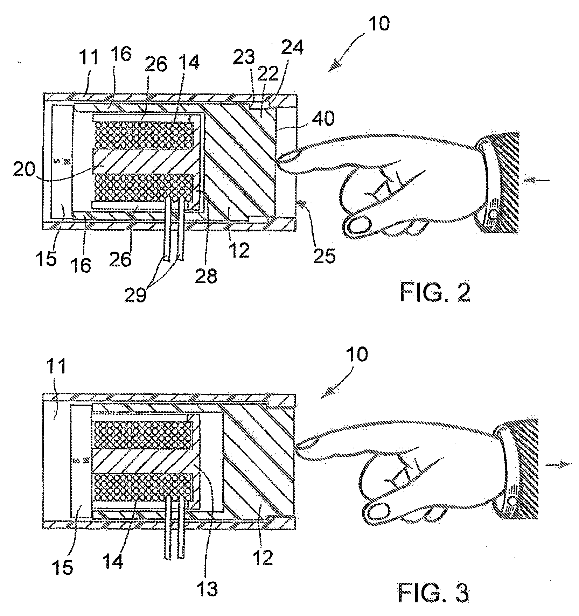

In proximity to the front aperture 25 the casing 11 presents on its inner wall a tooth 24 forming a limit stop for the pushbutton 12 (see Figures 2 and 3).

The pushbutton 12 presents a front portion 22 of reduced diameter at the aperture 25, which terminates with a pushbutton front surface 40 intended to be pressed, for example under the action of a user's finger or of any pressing force. The pushbutton 12 presents a shoulder 23 arranged to cooperate with the tooth 24 to prevent the pushbutton 12 from withdrawing from the casing 11 frontwards.

The ferromagnetic core 13 comprises a head 28 from which a central shank 20 and two lateral shanks 26, 27 project longitudinally. The electrical winding 14, formed for example from a cylindrical coil of electrically conducting wire, is mounted about the central shank 20.

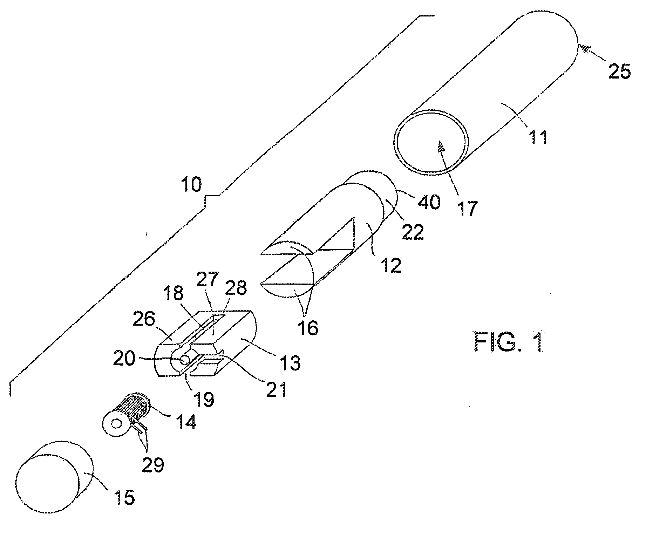

The outer shanks 26, 27 embrace the winding 14 on opposite sides and are separated by two slots 18 and 19 on the opposite sides of the core (Figure 1).

The shank 27 presents a radial slot 21 intended for the passage of the outward-directed terminal 29 of the winding 14.

The core 13 is secured to the inner wall of the casing 11 at the outer lateral faces of the shanks 26 and 27, for example by forcing, by gluing or by other fixing systems.

The core 13 forms with its head 28 a limit stop for the pushbutton 12 in the completely pressed position.

As shown in Figure 3, the length of the shanks 16 is chosen such that when the pushbutton 12 is in its rest position, the magnet 15 is in contact with the ferromagnetic core 13.

Figures 2 and 3 show the two operative positions of the generator, with the pushbutton pressed and with the pushbutton in its rest position respectively.

In the configuration shown in Figure 2 the pushbutton is pressed to abut against the ferromagnetic core 13. The magnet 15 is urged away from the core 13 by the shanks 16 against the action of the attractive force between the magnet and the core 13.

During the movement of the magnet 15 an electric voltage is generated at the terminals 29 of the generator winding.

Passage from the rest position to the pressed position takes place with a smooth snap movement when the force impressed on the pushbutton 12 exceeds a predetermined threshold by virtue of the fact that the magnetic attractive force decades rapidly on detaching the magnet 15 from the core 13.

This ensures an electric voltage of predetermined intensity and duration at the generator terminals.

When force is removed from the pushbutton 12, the magnet 15 returns to its initial configuration of Figure 3 under the action of the magnetic attractive force until it touches the core 13. The pushbutton 12 is urged into the rest position by the shanks 16.

By impressing an oscillating force on the pushbutton a series of alternating voltage pulses is obtained, which are of one sign when the pushbutton is pressed and of opposite sign when the pushbutton is released.

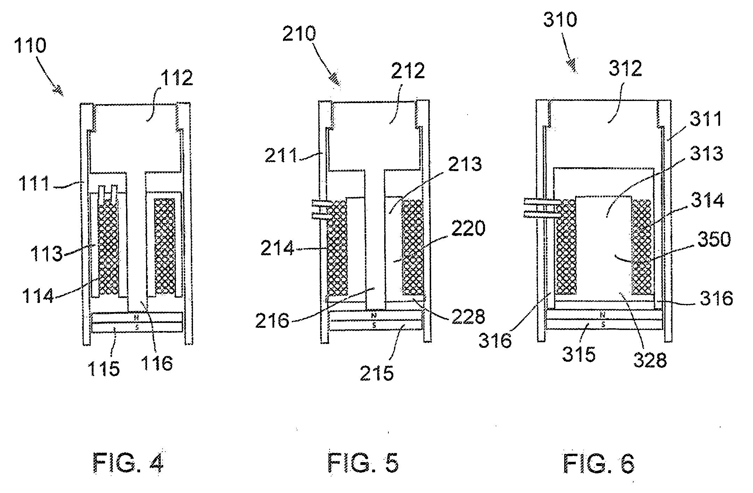

In the embodiment shown in Figure 4 the generator 110 comprises a single arm 116 which passes axially through the ferromagnetic core 113 and the winding 114. The ferromagnetic core 113 comprises a first inner cylindrical wall embracing the arm 116, an outer cylindrical wall in contact with the outer casing 111 and an annular head portion connecting the two walls together.

The electrical winding 114 is held between the two cylindrical walls by the core 113.

In the generator shown in Figure 5 the means for transmitting the pushbutton force to the magnet comprise a single arm 216 coaxial to the casing 211, which passes through the core 213 and the winding 214.

In this case the ferromagnetic core 213 comprises a cylindrical wall 220 which embraces the arm 216 and projects from a head 228 disposed in proximity to the magnet 215.

In the embodiment shown in Figure 6 the generator presents a pair of arms 316 which project from the body of the pushbutton 312 to embrace the ferromagnetic core and the winding on opposite sides.

In this case the core 313 presents a lower head 328 in proximity to the magnet 315 and a central shank 313 about which the conductor of the winding 314 is wound.

From the aforegoing it is apparent that the generator of the invention presents numerous advantages, and in particular:
- it presents a simple, compact and economical structure requiring only a small number of components for its operation,
- it does not require the use of a return spring or similar systems in that the pushbutton returns to its rest position automatically,
- the components can be easily assembled,
- it enables the desired electric voltage to be achieved across the winding terminals in that the snap movement of the pushbutton from its rest position to its pressed position is sharp and immediate when the force exceeds a predetermined threshold, as the magnetic pressure between the magnet and ferromagnetic core decades rapidly during their mutual withdrawal.

A wireless transmitter could be incorporated into the generator winding to emit a wireless signal when the pushbutton is pressed. In this manner the generator can perform a wireless pushbutton function, for example in an industrial environment to form a limit switch, a pushbutton sensor or the like.

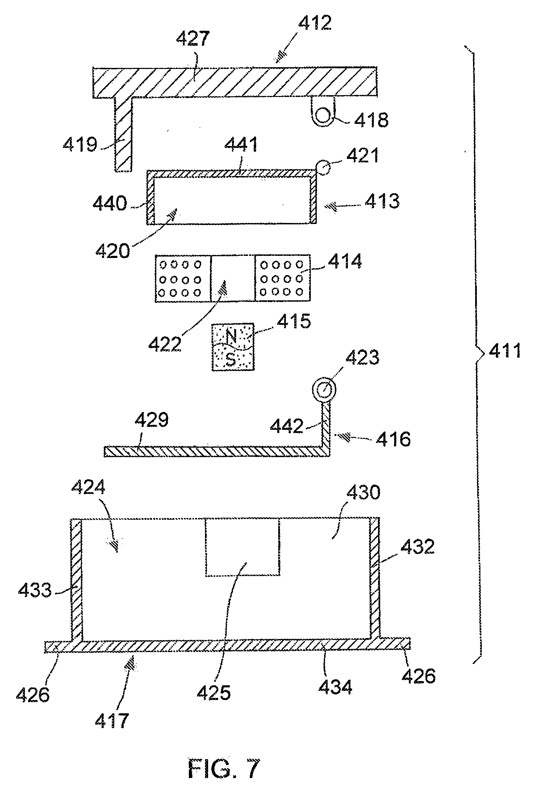

In the embodiment shown in Figure 7 the pushbutton 412 presents an upper flat portion 427 intended to be pressed by the user, and two inwardly projecting flanges 418 provided with holes to receive a pin 428 for hinging it to the generator casing.

The pushbutton also comprises an arm 419 projecting from the upper flat portion 427 towards the generator interior from the opposite end to the flanges 418.

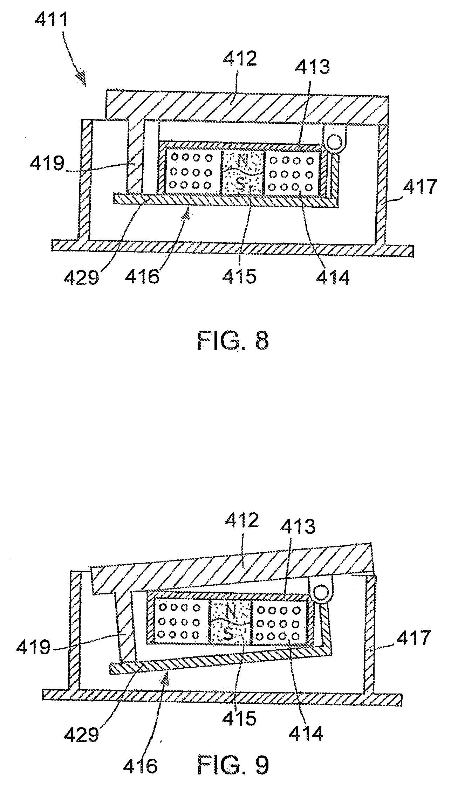

When assembly is complete (see Figures 8 and 9) the arm 419 rests with its end against a movable portion 416 of ferromagnetic material.

The core 413 comprises a circular upper wall 441 and a cylindrical side wall 440. With the generator assembled, the side wall 440 embraces the winding 414, which remains contained within the cylindrical cavity 420 of the core 413.

The core 413 comprises a pair of eyelets 421 to receive the hinge pin 428.

The electrical winding 414 is annular in shape and presents an inner cavity 422 housing the magnet 415.

The magnet 415 is cylindrical to mate with a central cavity 422 for example by forcing, and presents two poles disposed in sequence along an axial direction of the winding 414.

The movable portion 416 is of L-shape, comprising a wall 442 substantially parallel to the axis of the winding 414 and positioned laterally to this latter.

At the top of the wall 442 there is an external hole 423 to receive the hinge pin 428, at the level of which the L-shaped portion remains interposed between the flange 418 and the eyelets 421.

The movable portion 416 also comprises a positionable wall 429 which extends below the winding, until it projects from the side opposite the vertical wall 442.

The end of the wall 429, at least during pushbutton pressing, rests against the arm 419 within the pushbutton.

The casing 417 is of upperly open parallelepiped box form and comprises a lower wall 434, two side walls 432 and 433, and two longitudinal side walls 430, 431. The side walls 430, 433 form a cavity 424 which receives the winding 414, the core 413 and the L-shaped movable portion 416.

The longitudinal side walls 430 and 431 have a concavity 425 forming a seat to receive opposing sides of the core, such that this remains rigid within the casing during normal generator operation.

The casing 417 also comprises two flanges 426 at its opposing longitudinal ends, for fixing the pushbutton generator for example to a wall.

The core 413 and the movable portion 416 form an iron magnetic circuit which is exposed to the magnetic flux generated by the permanent magnet 415.

The generator of this embodiment operates in the following manner.

When at rest the pushbutton is in the raised position with the upper flat portion 427 substantially parallel to the base of the casing 417.

The movable iron portion 416 is virtually in contact with the magnet 415, the lower face of the winding 414 and also the lower edge of the cylindrical side wall of the core 413.

The lower wall 429 of the L-shaped element rests against the arm 419 of the pushbutton 412.

The magnetic attraction force between the magnet 415 and the ferromagnetic movable portion 416 together with the fact that the pushbutton 412 rests against the upper edge of the casing 417 means that the pushbutton 412 is maintained securely in the raised rest position as shown in Figure 7.

When the pushbutton 412 is pressed by the user, with a force exceeding a predetermined threshold depending on the magnetic attraction force between the magnet 415 and the movable portion 416, the pushbutton 412 moves into the lowered position shown in Figure 8.

The arm 419 pushes against the lower wall 429 of the portion 416 to cause its withdrawal from the magnet 415 against the force of attraction.

The core 413, the winding 414 and the magnet 415 remain rigid with the casing 417 by virtue of their engagement in the casing seats 425.

The movement of the portion 416 takes place with a sharp snap action, due to the rapid decay of the magnetic attraction force as the magnet 415 separates. The magnetic circuit changes configuration and opens. The magnetic flux passing through the winding 414 hence varies so that an electric voltage is generated across the winding terminals.

The core 413 forms a limit stop for the descent of the pushbutton 412. When the pressing action on the pushbutton 412 ceases, the magnetic attraction force between the magnet 415 and the wall 429 returns the portion 416 upwards, this also urging the pushbutton 412 by virtue of resting against arm 419.

The generator hence returns to its starting position of Figure 8.

The magnetic flux which cuts the winding also varies during the resetting of the pushbutton, to return to its maximum value, so generating a new voltage pulse.

Alternatively the magnet could also not be fixed rigidly to the winding and to the casing, but could be movable rigid with the movable portion 416 of the magnetic circuit.

In a further embodiment not shown in the drawings, a polarized magnet is used in radial direction instead of in the axial one.

## Claims

1. Electric generator of the pushbutton type comprising:
- a casing (11,111,211,311,417),
- a ferromagnetic element (13,113,213,313,413,416), housed in said casing (11,111,211,311,417) and having at least a portion fixed with respect to this,
- an electric winding (14,114,214,314,414) mounted on said ferromagnetic element (13,113,213,313,413,416) and provided with terminals for feeding an external user circuit,
- a permanent magnet (15,115,215,315,415) forming with said ferromagnetic element (13,113,213,313,413,416) a magnetic circuit linked with said electric winding (14,114,214,314,414),
- a pushbutton projecting from said casing (11,111,211,311,417) with a portion that can be activated by the operator and movable between a rest portion and a stressed portion, in which the characteristics of said magnetic circuit are modified, wherein
- said pushbutton (12,112,212,312,412) is provided with at least an arm (16,116,216,316,419) integral with this,
- in the rest condition of said pushbutton (12,112,212,312,412) the ferromagnetic element (13,113,213,313,413,416) and the permanent magnet (15,115,215,315,415) are kept in contact in attracted condition and form a magnetic circuit without air gaps and said arm (16,116,216,316,419) of said pushbutton (12,112,212,312,412) is in direct contact with a component (15,115,215,315,416) of said magnetic circuit,
- in the stressed condition of said pushbutton (12,112,212,312,412) its arm (16,116,216,316,419) acts in the sense of creating in said magnetic circuit at least an air gap of such a size to assure in any case a magnetic attraction force between the parts delimiting it, the fixed portion of said ferromagnetic element (13,113,213,313,413,416) forming a limit stop for said pushbutton (12,112,212,312,412) in said stressed condition.

2. A generator as claimed in claim1, **characterised in that** the pushbutton (12,112,212,312) is movable axially to the casing.

3. A generator as claimed in claim 2, **characterised in that** the pushbutton (12,112,212,312), is provided at least with one arm interacting with the magnet.

4. A generator as claimed in claim 3, **characterised in that** the arm (116,216) passes axially through the electric winding (114,214).

5. A generator as claimed in claim 3, **characterised in that** the pushbutton is provided with two arms (16,316) which embrace the electric winding (14,314) on opposite sides.

6. A generator as claimed in claim 1, **characterised in that** the ferromagnetic element (413) comprises an hollow casing (440,441) having a cylindrical shape and housing said electric winding (414) which on its turn houses in its axial cavity said permanent magnet (415), and also comprises a mobile portion (416) in the shape of an L and articulated to said casing (440,441) to go from a state of contact with the side wall (440) of the casing to a detached state, by means of the thrust of said arm (419) protruding from said pushbutton (412), which also is joined to said casing (440,441) on a pin (428), on which the movable portion (416) of the electromagnetic element (413) is also hinged.

7. A generator as claimed in claim 1, **characterised by** comprising a wireless transmitter associated with the electric winding (14,114,214,314,414) able to emit a wireless signal following to the activation of the pushbutton (12,112,212,312,412).

8. A generator as claimed in claim 1, **characterised in that** the magnet is polarized in radial direction.

## Patentansprüche

1. Elektrischer Generator des Druckknopftyps, der Folgendes umfasst:
- ein Gehäuse (11, 111, 211, 311, 417),
- ein ferromagnetisches Element (13, 113, 213, 313, 413, 416), das in dem Gehäuse (11, 111, 211, 311, 417) untergebracht ist und mindestens einen Abschnitt besitzt, der in Bezug auf dieses fest angebracht ist,
- eine elektrische Wicklung (14, 114, 214, 314, 414), die an dem ferromagnetischen Element (13, 113, 213, 313, 413, 416) montiert ist und mit Anschlüssen für das Einspeisen in eine externe Anwenderschaltung ausgestattet ist,
- einen Permanentmagneten (15, 115, 215, 315, 415), der mit dem ferromagnetischen Element (13, 113, 213, 313, 413, 416) einen magnetischen Kreis bildet, der mit der elektrischen Wicklung (14, 114, 214, 314, 414) verbunden ist,
- einen Druckknopf, der von dem Gehäuse (11, 111, 211, 311, 417) vorsteht, mit einem Abschnitt, der durch den Bediener aktiviert werden kann und der zwischen einem Ruheabschnitt und einem angespannten Abschnitt, in dem die Eigenschaften des magnetischen Kreises geändert sind, beweglich ist, wobei
- der Druckknopf (12, 112, 212, 312, 412) mit mindestens einem Arm (16, 116, 216, 316, 419), der mit diesem einteilig ausgebildet ist, ausgestattet ist,
- im Ruhezustand des Druckknopfes (12, 112, 212, 312, 412) das ferromagnetische Element (13, 113, 213, 313, 413, 416) und der Permanentmagnet (15, 115, 215, 315, 415) in einem angezogenen Zustand in Kontakt gehalten werden und einen magnetischen Kreis ohne Luftlücken bilden und wobei der Arm (16, 116, 216, 316, 419) des Druckknopfes (12, 112, 212, 312, 412) in unmittelbarem Kontakt mit einer Komponente (15, 115, 215, 315, 416) des magnetischen Kreises ist,
- im angespannten Zustand des Druckknopfes (12, 112, 212, 312, 412) sein Arm (16, 116, 216, 316, 419) in dem Sinne wirkt, im magnetischen Kreis mindestens eine Luftlücke einer derartigen Größe zu bilden, um in jedem Fall eine magnetische Anziehungskraft zwischen den Teilen, die es begrenzen, zu gewähren, wobei der feste Abschnitt des ferromagnetischen Elements (13, 113, 213, 313, 413, 416) einen Begrenzungsstopp für den Druckknopf (12, 112, 212, 312, 412) in dem angespannten Zustand bildet.

2. Generator nach Anspruch 1, **dadurch gekennzeichnet, dass** der Druckknopf (12, 112, 212, 312) zu dem Gehäuse axial beweglich ist.

3. Generator nach Anspruch 2, **dadurch gekennzeichnet**, das der Druckknopf (12, 112, 212, 312) mit mindestens einem Arm ausgestattet ist, der mit dem Magneten wechselwirkt.

4. Generator nach Anspruch 3, **dadurch gekennzeichnet, dass** der Arm (116, 216) axial durch die elektrische Wicklung (114, 214) führt.

5. Generator nach Anspruch 3, **dadurch gekennzeichnet, dass** der Druckknopf mit zwei Armen (16, 316) ausgestattet ist, die die elektrische Wicklung (14, 314) auf gegenüberliegenden Seiten umfassen.

6. Generator nach Anspruch 1, **dadurch gekennzeichnet, dass** das ferromagnetische Element (413) ein hohles Gehäuse (440, 441) mit einer zylindrischen Form, das die elektrische Wicklung (414) aufnimmt, umfasst, die ihrerseits in ihrem axialen Hohlraum den Permanentmagneten (415) aufnimmt, und außerdem einen mobilen Abschnitt (416) in der Form eines Ls umfasst und an dem Gehäuse (440, 441) mit einem Gelenk angebracht ist, um von einem Zustand des Kontakts mit der Seitenwand (440) des Gehäuses zu einem gelösten Zustand mit Hilfe des Schubs des Arms (419) überzugehen, der von dem Druckknopf (412) vorsteht, der außerdem mit dem Gehäuse (440, 441) auf einem Stift (428) verbunden ist, auf dem der bewegliche Abschnitt (416) des elektromagnetischen Elements (413) angelenkt ist.

7. Generator nach Anspruch 1, **dadurch gekennzeichnet, dass** er einen drahtlosen Sender umfasst, der der elektrischen Wicklung (14, 114, 214, 314, 414) zugeordnet ist und der ein drahtloses Signal anschließend an die Aktivierung des Druckknopfes (12, 112, 212, 312, 412) aussenden kann.

8. Generator nach Anspruch 1, **dadurch gekennzeichnet, dass** der Magnet in radialer Richtung polarisiert ist.

## Revendications

1. Générateur électrique de type à bouton-poussoir, comprenant :
- un boîtier (11, 111, 211, 311, 417),
- un élément ferromagnétique (13, 113, 213, 313, 413, 416) logé dans ledit boîtier (11, 111, 211, 311, 417), et ayant au moins une partie fixée par rapport à lui,
- un enroulement électrique (14, 114, 214, 314, 414) monté sur ledit élément ferromagnétique (13, 113, 213, 313, 413, 416) et pourvu de bornes pour alimenter un circuit d'utilisateur externe,
- un aimant permanent (15, 115, 215, 315, 415) formant avec ledit élément ferromagnétique (13, 113, 213, 313, 413, 416) un circuit magnétique lié audit enroulement électrique (14, 114, 214, 314, 414),
- un bouton-poussoir faisant saillie dudit boîtier (11, 111, 211, 311, 417), avec une partie qui peut être activée par l'opérateur et pouvant se déplacer entre une partie de repos et une partie soumise à contrainte, où les caractéristiques dudit circuit magnétique sont modifiées, où
- ledit bouton-poussoir (12, 112, 212, 312, 412) est pourvu d'au moins un bras (16, 116, 216, 316, 419) faisant partie intégrante de celui-ci,
- dans l'état de repos dudit bouton-poussoir (12, 112, 212, 312, 412), l'élément ferromagnétique (13, 113, 213, 313, 413, 416) et l'aimant permanent (15, 115, 215, 315, 415) sont maintenus en contact dans un état d'attraction et forment un circuit magnétique sans espace d'air, et ledit bras (16, 116, 216, 316, 419) dudit bouton-poussoir (12, 112, 212, 312, 412) est en contact direct avec un composant (15, 115, 215, 315, 416) dudit circuit magnétique,
- dans l'état soumis à contrainte dudit bouton-poussoir (12, 112, 212, 312, 412), ce bras (16, 116, 216, 316, 419) agit dans le sens de la création, dans ledit circuit magnétique, d'au moins un espace d'air d'une taille telle qu'elle assure dans tous les cas une force d'attraction magnétique entre les parties le délimitant, la partie fixe dudit élément ferromagnétique (13, 113, 213, 313, 413, 416) formant une butée de fin de course pour ledit bouton-poussoir (12, 112, 212, 312, 412) dans ledit état soumis à contrainte.

2. Générateur tel que revendiqué dans la revendication 1, **caractérisé en ce que** le bouton-poussoir (12, 112, 212, 312) est mobile, axialement, par rapport au boîtier.

3. Générateur tel que revendiqué dans la revendication 2, **caractérisé en ce que** le bouton-poussoir (12, 112, 212, 312) est pourvu d'au moins un bras interagissant avec l'aimant.

4. Générateur tel que revendiqué dans la revendication 3, **caractérisé en ce que** le bras (116, 216) passe axialement à travers le bobinage électrique (114,214).

5. Générateur tel que revendiqué dans la revendication 3, **caractérisé en ce que** le bouton-poussoir est pourvu de deux bras (16, 316) qui embrassent le bobinage électrique (14, 314) sur des côtés opposés.

6. Générateur tel que revendiqué dans la revendication 1, **caractérisé en ce que** l'élément ferromagnétique (413) comprend un boîtier creux (440, 441) ayant une forme cylindrique et contenant ledit bobinage électrique (414) qui, à son tour, contient dans sa cavité axiale ledit aimant permanent (415), et comprend également une partie mobile (416) en forme de L et articulée par rapport audit boîtier (440, 441) pour passer d'un état de contact avec la paroi latérale (440) du boîtier à un état détaché, au moyen de la butée dudit bras (419) faisant saillie dudit bouton-poussoir (412), qui est également jointe audit boîtier (440, 441) sur une broche (428), sur laquelle la partie mobile (416) de l'élément ferromagnétique (413) est également montée.

7. Générateur tel que revendiqué dans la revendication 1, **caractérisé en ce qu'**il comprend un émetteur sans fil associé au bobinage électrique (14, 114, 214, 314, 414) capable d'émettre un signal sans fil suite à l'activation du bouton-poussoir (12, 112, 212, 312, 412).

8. Générateur tel que revendiqué dans la revendication 1, **caractérisé en ce que** l'aimant est polarisé dans une direction radiale.
